# EUROPÄISCHE PATENTSCHRIFT

(11) **EP 2 230 089 B1**
(45) Veröffentlichungstag und Bekanntmachung des Hinweises auf die Patenterteilung: **12.10.2011**
(21) Anmeldenummer: 10155906.0
(22) Anmeldetag: 09.03.2010
(51) Int. Cl.: B41M 5/00, B41M 5/52

(54) **Prüftinktur für Tintenstrahl-Beschichtung**
Test tincture for inkjet coating
Teinture de contrôle pour revêtement par rayonnement de teinture

(30) Priorität: 19.03.2009 DE 102009013465
(43) Veröffentlichungstag der Anmeldung: 22.09.2010
(73) Patentinhaber: Mitsubishi HiTec Paper Europe GmbH, 33699 Bielefeld (DE)
(72) Erfinder: Päuser, Nico, 33818, Leopoldshöhe (DE); Jagiello, Andreas, 33699, Bielefeld (DE); Böhme, Manila, 33813, Oerlinghausen (DE)
(74) Vertreter: Hiller, Volker

(56) Entgegenhaltungen:
- JP-A- 8 003 494
- JP-A- 59 038 087

## Beschreibung

Die vorliegende Erfindung betrifft ein Verfahren zum schnellen und einfachen Nachweis einer Kieselsäure als Pigment aufweisenden Tintenstrahl-Beschichtung.

Aufzeichnungsmaterialien zur Bedruckung im Tintenstrahldruckverfahren, häufig allgemein als Inkjet-Aufzeichnungsmaterialien bezeichnet, erfreuen sich schon seit vielen Jahren großer Beliebtheit. Ursprünglich als kostengünstige Alternative zu dem sehr teuren Photopapier gedacht, gewannen sie nicht zuletzt durch den Siegeszug der Digitalfotografie sprunghaft an Bedeutung. Heute gibt es Inkjet-Aufzeichnungsmaterialien in einer schier endlosen Palette von sehr einfach gestalteten Papieren ohne bzw. nur mit Einfach-Beschichtung, die auch gerne und überzeugend als Kopierpapier eingesetzt werden können, bis hin zu vielfach front- und rückseitig beschichteten Aufzeichnungsmaterialien, die als Substrat sowohl Papier wie auch Folie aufweisen können.

Die insbesondere bei den Endverbrauchern sehr beliebten matt gestrichenen Tintenstrahldruck-Papiere weisen sehr häufig nur vorderseitig eine Tintenstrahl-Beschichtung auf, während die Papierrückseite ohne Tintenstrahl-Beschichtung, jedoch gegebenenfalls mit Stärkepräparation versehen ist. Optisch unterscheiden sich dann Vorder- und Rückseite des Tintenstrahldruck-Papiers kaum. Erst bei Bedruckung des Papiers werden die Unterschiede von Vorder- und Rückseite offenbar: während der Tintenstrahldruck vorderseitig farbintensiv und beständig ausgebildet wird, verblasst der rückseitig aufgebrachte Tintenstrahldruck sofort und auch das Farbbild vermag nicht zu überzeugen.

Durch Verwechslung von Papiervorderseite - mit der Tintenstrahl-Beschichtung - und Papierrückseite - ohne Tintenstrahl-Beschichtung - kommt es immer wieder zu Fehlhandhabungen sowohl in den innerbetrieblichen Fertigungsstufen wie auch bei den Endverbrauchern. Beispielsweise können Plotterrollen aus Tintenstrahldruck-Papier versehentlich mit der Tintenstrahl-Beschichtung nach innen gewickelt werden, so dass sie vom Endverbraucher nicht verwendet werden können. In der Folge handelt es sich immer um kostenintensive Reklamationen, aufwändige Rücktransporte und erhebliche Rufverluste.

Es bestand seitens der Erfinder der Wunsch nach einer schnellen und einfachen Prüfmethode zum eindeutigen Erkennen der frontseitigen Tintenstrahl-Beschichtung. Die neue Prüfmethode sollte nach Möglichkeit ohne jegliche Vorkenntnisse und ohne teure Gerätschaften durchführbar sein, da sie sonst für den Endverbraucher ungeeignet ist.

Die meisten Tintenstrahl-Beschichtungen und insbesondere matt gestrichene Tintenstrahl-Beschichtungen weisen als Pigment Kieselsäure auf zum Beispiel JP-A-59 038 087. Im Rahmen von zahlreichen Diskussionen und Vorversuchen wurde erkannt, dass die Aufgabe einer einfachen Erkennung einer Kieselsäure als Pigment aufweisenden Tintenstrahl-Beschichtung mit einem Verfahren zu lösen ist, wobei das Verfahren die folgenden Schritte aufweist:
□ Zuführen eines Aufzeichnungsmaterials mit mindestens auf einer Seite des Aufzeichnungsmaterials aufgebrachter Tintenstrahl-Beschichtung, wobei die Tintenstrahl-Beschichtung Kieselsäure als Pigment aufweist.
□ Aufbringen einer Prüftinktur auf die mindestens auf einer Seite des Aufzeichnungsmaterials aufgebrachten Tintenstrahl-Beschichtung.
□ Feststellen einer bestehen bleibenden Farbreaktion der Prüftinktur mit der Kieselsäure

Die Farbreaktion zum Nachweis einer Kieselsäure als Pigment aufweisenden Tintenstrahl-Beschichtung ist erfindungsgemäß eindeutig. Sie unterscheidet sich in Intensität und/oder Farbton von einer möglichen Reaktion, die sich gegebenenfalls beim Aufbringen der Prüftinktur auf eine Seite des Aufzeichnungsmaterials ohne Tintenstrahl-Beschichtung ergibt.

Die Erfinder erkannten, dass eine Prüftinktur, die als wirksame Komponente Bromkresolpurpur, das ist C₂₁H₁₆Br₂O₅S, CAS-Nr. 115-40-2, enthält, besonders überzeugend eingesetzt werden kann. Wird die Prüftinktur auf die Tintenstrahl-Beschichtung aufgebracht, reagiert das Bromkresolpurpur mit der Kieselsäure unter Farbbildung. Die ausgebildete Farbe ist leicht zu erkennen und verblasst nicht.

Das It vorliegender Erfindung bevorzugte Bromkresolpurpur der Prüftinktur ist in einer ersten Ausführungsform in Wasser als Hauptbestandteil der Prüftinktur gelöst, wozu das Bromkresolpurpur zusammen mit dem Wasser stark erhitzt werden muss. Zur Verstärkung der farbbildenden Reaktion kann die Prüftinktur in diesem Fall zusätzlich Phenolrot, das ist Phenolsulfonphthalein, enthalten. Als besonders bevorzugte Rezeptur für die Prüftinktur It. dieser ersten Ausführungsform kommen auf 150 ml Wasser 0,10 Gramm bis 0,25 Gramm Bromkresolpurpur und optional zusätzlich 0,10 Gramm bis 0,25 Gramm Phenolrot.

Das It. vorliegender Erfindung bevorzugte Bromkresolpurpur der Prüftinktur ist in einer zweiten Ausführungsform in Ethanol als Hauptbestandteil der Prüftinktur gelöst. Da sich Ethanol rasch verflüchtigt und die Tinktur deshalb bei Zimmertemperatur nicht lange benutzt werden könnte, hat sich der Zusatz von Polyethylenglycol (PEG) besonders bewährt. Als besonders bevorzugte Rezeptur für die Prüftinktur It. dieser zweiten Ausführungsform kommen auf 150 ml Ethanol 0,10 Gramm bis 0,25 Gramm Bromkresolpurpur. Optional und besonders bevorzugt wird der Prüftinktur zusätzlich Polyethylenglycol (PEG) zugegeben in einer Menge von 5-10 Gew.-%, bezogen auf das Ethanol.

In einer ganz besonders bevorzugten Ausführungsform sieht das erfindungsgemäße Verfahren das Aufbringen der Prüftinktur mittels Filzstift vor. Zu diesem Zweck wird ein bevorzugt wieder befüllbarer Filzstift mit der Prüftinktur versehen. Das Aufbringen der Prüftinktur geschieht dann durch einfaches Bemalen der zu prüfenden Seite eines Tintenstrahldruck-Papiers mit dem entsprechend präparierten Filzstift.

Das erfindungsgemäße Verfahren ist jedoch in keiner Weise auf die Aufbringung der Tinktur mittels Filzstift beschränkt. Die Prüftinktur kann genauso mittels Pipette, kleinem Pinsel oder Stempel aufgebracht werden, auch weitere Auftragungsmethoden sind möglich.

Versuchsweise wird ein Aufzeichnungsmaterial mit frontseitig aufgebrachter Tintenstrahl-Beschichtung ausgewählt. Die Tintenstrahl-Beschichtung weist unter anderem
- eine Pigmentmischung aus 1 Gew.-% Kalziumkarbonat und 53 Gew.-% Kieselsäure,
- 10 Gew.-% Tintenfixiermittel,
- 10 Gew.-% Bindemittel und 14 Gew.-% Co-Binder
Auf. Als Prüftinktur wird eine Lösung aus Ethanol mit einem Zusatz von Polyethylenglycol (PEG) in einer Menge von 8 Gew.-%, bezogen auf das Ethanol, und mit 0,15 Gramm Bromkresolpurpur, bezogen auf 150 ml Ethanol, benutzt, wobei die Prüftinktur in einen Filzstift eingegeben wird.

Nach einfachem Benetzen der Tintenstrahl-Beschichtung mit der Prüftinktur, in dem mit dem Filzstift ein ca. 5 cm langer Strich auf die Tintenstrahl-Beschichtung gemalt wird, entsteht eine auffallende und nicht mehr verschwindende, kräftige dunkelgrau erscheinende Farblinie. Diese Farblinie zeigt dem Benutzer des Filzstiftes mit der Prüftinktur unmissverständlich, dass hier die Vorderseite des untersuchten Aufzeichnungsmaterials mit der Kieselsäure als Pigment aufweisenden Tintenstrahl-Beschichtung vorliegt. Zum Zweck der Bestätigung wird auch auf die Rückseite des Aufzeichnungsmaterials mit dem Filzstift gemalt. Erwartungsgemäß ist hier nur eine gelbliche Farbreaktion festzustellen, da das Aufzeichnungsmaterial, rückseitig keine Tintenstrahl-Beschichtung aufweist.

Damit zeigt der Versuch, dass das vorgeschlagene Verfahren hervorragend geeignet ist, die zugrunde liegende Aufgabe zu lösen.

## Patentansprüche

1. Verfahren zum Nachweis einer Kieselsäure als Pigment aufweisenden Tintenstrahl-Beschichtung, wobei das Verfahren die folgenden Schritte aufweist:
Zuführen eines Aufzeichnungsmaterials mit mindestens auf einer Seite des Aufzeichnungsmaterials aufgebrachter Tintenstrahl-Beschichtung, wobei die Tintenstrahl-Beschichtung Kieselsäure als Pigment aufweist.
Aufbringen einer Prüftinktur auf die mindestens auf einer Seite des Aufzeichnungsmaterials aufgebrachten Tintenstrahl-Beschichtung.
Feststellen einer bestehen bleibenden Farbreaktion der Prüftinktur mit der Kieselsäure.

2. Verfahren nach Patentanspruch 1, **dadurch gekennzeichnet, dass** die Prüftinktur als wirksame Komponente Bromkresolpurpur, das ist C₂₁H₁₆Br₂O₅S, CAS-Nr. 115-40-2, enthält.

3. Verfahren nach einem der Patentansprüche 1 oder 2, **dadurch gekennzeichnet, dass** die Prüftinktur als Hauptbestandteil Wasser enthält.

4. Verfahren nach einem der Patentansprüche 1 oder 2, **dadurch gekennzeichnet, dass** die Prüftinktur als Hauptbestandteil Ethanol enthält.

5. Verfahren nach einem der Patentansprüche 1 oder 4, **dadurch gekennzeichnet, dass** die Aufbringung der Prüftinktur mittels eines Filzstiftes geschieht.

## Claims

1. Method of recognising an ink-jet coating comprising silicic acid as pigment, wherein the method comprises the following steps:
□ supply of a recording material having an ink-jet coating applied to at least one side of the recording material, the ink-jet coating comprising silicic acid as pigment,
□ application of a test tincture to the ink-jet coating applied to at least one side of the recording material,
□ detection of a lasting colour reaction of the test tincture with the silicic acid.

2. Method according to patent claim 1, **characterised in that** the test tincture comprises, as active component, bromocresol purple, that is C₂₁H₁₆Br₂O₅S, CAS No. 115-40-2.

3. Method according to one of patent claims 1 or 2, **characterised in that** the test tincture comprises water as principal constituent.

4. Method according to one of patent claims 1 or 2, **characterised in that** the test tincture comprises ethanol as principal constituent.

5. Method according to one of patent claims 1 or 4, **characterised in that** application of the test tincture is performed using a felt-tip pen.

## Revendications

1. Procédé pour la détection d'un revêtement jet d'encre présentant de l'acide silicique comme pigment, dans lequel le procédé présente les étapes suivantes:
o Apport d'un matériau d'enregistrement avec un revêtement jet d'encre appliqué, au moins, sur une face du matériau d'enregistrement, le revêtement jet d'encre présentant de l'acide silicique comme pigment,
o Application d'une teinture d'essai sur le revêtement jet d'encre appliqué, au moins, sur une face du matériau d'enregistrement,
o Constat d'une réaction de coloration constante de la teinture d'essai avec l'acide silicique.

2. Procédé selon la revendication 1, **caractérisé en ce que** la teinture d'essai contient comme composant actif du pourpre de bromocrésol, c'est-à-dire de formule C₂₁H₁₆Br₂O₅S, sous le numéro CAS 115-40-2.

3. Procédé selon l'une quelconque des revendications 1 ou 2, **caractérisé en ce que** la teinture d'essai contient de l'eau comme composant principal.

4. Procédé selon l'une quelconque des revendications 1 ou 2, **caractérisé en ce que** la teinture d'essai contient de l'éthanol comme composant principal.

5. Procédé selon l'une quelconque des revendications 1 à 4, **caractérisé en ce que** l'application de la teinture d'essai est effectuée au moyen d'un crayon feutre.
